# EUROPÄISCHE PATENTSCHRIFT

(11) **EP 2 828 544 B1**
(45) Veröffentlichungstag und Bekanntmachung des Hinweises auf die Patenterteilung: **16.03.2016**
(21) Anmeldenummer: 13711375.9
(22) Anmeldetag: 21.03.2013
(51) Int. Cl.: F16D 48/06

(54) **VERFAHREN ZUR FÜLLMENGENBESTIMMUNG**
METHOD FOR DETERMINING A FILLING QUANTITY
PROCÉDÉ DE DÉTERMINATION DE LA QUANTITÉ DE REMPLISSAGE

(30) Priorität: 23.03.2012 DE 102012005765
(43) Veröffentlichungstag der Anmeldung: 28.01.2015
(73) Patentinhaber: Deere & Company, Moline, IL 61265 (US)
(72) Erfinder: FINK, Manuel, 67133 Maxdorf (DE)
(74) Vertreter: John Deere GmbH & Co. KG
(86) Internationale Anmeldenummer: PCT/EP2013/055964
(87) Internationale Veröffentlichungsnummer: WO 2013/139925

(56) Entgegenhaltungen:
- WO-A1-2011/120724
- WO-A1-2013/029058
- DE-A1-102011 101 870

## Beschreibung

Die Erfindung betrifft ein Verfahren zur Füllmengenbestimmung in der Aktuatorik einer Kupplungsanordnung, welche eine Vorwärtskupplung und eine Rückwärtskupplung jeweils zum antriebsmäßigen Verbinden einer Eingangswelle mit einer Ausgangswelle aufweist, wobei zur Betätigung der Vorwärtskupplung eine erste steuerbare Betätigungseinheit und zur Betätigung der Rückwärtskupplung eine zweite steuerbare Betätigungseinheit vorgesehen ist. WO2011/120724 A1 ist der nächstliegende Stand der Technik.

In Traktoren der Marke John Deere kommen Getriebe zum Einsatz, deren Vorwärtskupplung und Rückwärtskupplung der Reversiereinheit bei Betrieb der jeweils anderen Kupplung soweit entlastet werden, dass die für die Kupplung zuständige Betätigungseinheit nicht lediglich drucklos geschaltet wird, sondern dass das in ihr befindliche Hydrauliköl zumindest teilweise entleert wird. In diesem Zustand befindet sich Luft in der Betätigungseinheit, die vor dem erneuten Schalten der entsprechenden Kupplung mittels der Betätigungseinheit aus dieser entlüftet werden muss, so dass ein hydraulischer Druck in der Betätigungseinheit aufgebaut werden kann. Während des Betriebs des Traktors bedeutet dies, dass bei jedem Wechsel der Fahrtrichtung eine solches teilweises Entleeren der Betätigungseinheit der einen Kupplung und ein Befüllen der Betätigungseinheit der anderen Kupplung stattfindet. Das eigentliche Lösen der einen Kupplung und Schalten der anderen Kupplung für die andere Fahrtrichtung ist eine Funktion des durch die Bedienperson betätigten Kupplungspedals, so dass das Loslassen des Kupplungspedals das Entlüften und Befüllen der Betätigungseinheit der zu schaltenden Kupplung steuert. Für den Bedienkomfort, den die Bedienperson erfährt, ist zum einen entscheidend, dass in einem möglichst kurzen und genau bestimmten Zeitraum die Betätigungseinheit entlüftet wird, so dass ab dem Zeitpunkt der vollständigen Entlüftung und nach Voransteuern mit einem geringen Kupplungsdruck eine gezielte und dosierte Modulation des Kupplungsdrucks mittels des Kupplungspedals durch die Bedienperson erfolgen kann. Während ein zu langes Zeitintervall, innerhalb dessen die Betätigungseinheit erst vollständig entlüftet ist, für die Bedienperson eine träges Schaltgefühl entstehen lassen würde, ist zum anderen für den Bedienkomfort entscheidend, welcher Kupplungsdruck sich bei einer für die Bedienperson möglichst optimalen Pedalposition unmittelbar nach dem Entlüften der Betätigungseinheit der zu schaltenden Kupplung einstellt. Hierbei ist insbesondere ein zu hoher Kupplungsdruck dem Bedienkomfort abträglich, da sich ein zu hoher Kupplungsdruck für die Bedienperson in einer unkontrollierbaren Bissigkeit der Kupplungsanordnung während eines Wechsels der Fahrtrichtung äußert. Ein zu niedriger Kupplungsdruck unmittelbar nach dem Entlüften der Betätigungseinheit würde sich für die Bedienperson ebenso in einem trägen Schaltgefühl äußern. Für einen möglichst zufriedenstellenden Bedienkomfort gilt es also dieses Zeitintervall der Entlüftung und den anliegenden Kupplungsdruck unmittelbar im Anschluss daran als Werte an sich festzulegen als auch aufeinander abzustimmen.

Zur Vermeidung dieser nicht akzeptablen Einbußen an Bedienkomfort und angesichts der Tatsache, dass jedes Getriebe beziehungsweise jede Kupplungsanordnung auch bei qualitativ hochwertiger Fertigung toleranzbehaftet ist, müsste jedes Getriebe vor Inbetriebnahme eines Traktor einen Kalibrierprozess durchlaufen, bei dem genau die Hydraulikölmenge, die erforderlich ist zur vollständigen Entlüftung der Betätigungseinheit, und genau der Kupplungsdruck, der nach Entlüften unter Vermeidung von Bissigkeit der Kupplung anliegt, bestimmt werden. Heutige Kalibrierprozesse benötigen eine Last an der Ausgangswelle der Kupplungsanordnung. Für bestimmte, hinter der Kupplungsanordnung verbaute Getriebe bedeutet dies, dass ein Kraftfluss von der Ausgangswelle der Kupplungsanordnung über das Getriebe und das Differential zu den Antriebsrädern geschaltet ist. In ungünstigen und unter allen Umständen zu vermeidenden Fällen kann dieser Kraftfluss zu einer deutlichen Fahrzeugbewegung während des Kalibrierprozesses führen, mit den entsprechenden Verletzungsmöglichkeiten im Umkreis des Traktors.

Hiervon ausgehend ist die Aufgabe der vorliegenden Erfindung einen Kalibrierprozess bereitzustellen, der bei frei drehender Ausgangswelle der Kupplungsanordnung durchgeführt werden kann.

Die Aufgabe wird erfindungsgemäß gelöst durch ein Verfahren gemäß Anspruch 1 zur Füllmengenbestimmung in der Aktuatorik einer Kupplungsanordnung, welche eine Vorwärtskupplung und eine Rückwärtskupplung jeweils zum antriebsmäßigen Verbinden einer Eingangswelle mit einer Ausgangswelle aufweist, wobei zur Betätigung der Vorwärtskupplung eine erste steuerbare Betätigungseinheit und zur Betätigung der Rückwärtskupplung eine zweite steuerbare Betätigungseinheit vorgesehen ist.

Durch dieses Verfahren kann in vorteilhafterweise auf einen geschalteten Kraftfluss zwischen der Ausgangswelle der Kupplungsanordnung und den Antriebsrädern eines landwirtschaftlichen Nutzfahrzeugs, in welches die Kupplungsanordnung eingebaut ist, verzichtet werden. Vielmehr beruht der erfinderische Gedanke darauf, die Ausgangswelle über eine der Kupplungen für ein definiertes Zeitintervall antriebsmäßig mit der durch den Motor des landwirtschaftlichen Nutzfahrzeugs angetriebenen Eingangswelle der Kupplungsanordnung zu verbinden und die Ausgangswelle danach lediglich durch parasitäre Lasten abgebremst frei drehen zu lassen, um sie in diesem Zustand über die andere Kupplung erneut mit der Eingangswelle zu verbinden. Hierbei kann zum einen der Fall auftreten, dass die Ausgangswelle nach kuppeln mit der Eingangswelle keine Änderung ihrer Drehzahl erfährt, woraus geschlossen werden kann, dass die entsprechende Betätigungseinheit noch nicht entlüftet ist und noch kein Kupplungsdruck aufgebaut wurde. Zum anderen kann der Fall auftreten, dass die Ausgangswelle nach kuppeln mit der Eingangswelle eine deutliche beziehungsweise abrupte Änderung ihrer Drehzahl erfährt, woraus geschlossen werden kann, dass die Betätigungseinheit entlüftet ist und zusätzlich bereits ein nicht mehr geringer Kupplungsdruck aufgebaut wurde, der im normalen Betrieb zu der unerwünschten Bissigkeit führen würde.

Bevorzugt ist ein Verfahrensschritt vorgesehen, bei dem in einem Zeitintervall t₀ ein zumindest teilweises Entleeren der zweiten der ersten oder zweiten Betätigungseinheit stattfindet. Hierdurch wird sichergestellt, dass die Betätigungseinheit, deren Füllmengen bestimmt beziehungsweise kalibriert werden soll, zu Beginn des Verfahrens entleert wird.

Bevorzugt beträgt das Zeitintervall t₀ in Abhängigkeit der Drehzahl n_{E} der Eingangswelle zwischen 5 und 10 Sekunden. Dies bedeutet, dass bei geringer Drehzahl der Eingangswelle das Zeitintervall t₀ länger gewählt wird und umgekehrt. Hierdurch kann in jedem Fall die gewünschte ausreichende Entleerung der Betätigungseinheit gewährleistet werden.

Bevorzugt endet das Zeitintervall t₁, wenn anhand eines Vergleichs der Drehzahlen n_{E}, n_{A} der Eingangswelle und der Ausgangswelle ein zumindest annähernd schlupffreier Zustand der durch die erste der ersten oder zweiten Betätigungseinheit angesteuerten Vorwärtskupplung oder Rückwärtskupplung detektiert wird. Ein schlupffreier Zustand bedeutet, dass die Eingangsdrehzahl ein Verhältnis zur Ausgangsdrehzahl aufweist, welches genau einem Übersetzungsverhältnis zwischen beiden Wellen entspricht. Hierbei kann das Übersetzungsverhältnis abweichend von 1 sein, beispielsweise wenn zwischen den beiden Wellen ein Planetenradgetriebe geschaltet ist.

Bevorzugt beträgt der Faktor X = 0,75 und der Faktor Y = 2. Ein Faktor X = 0,75 ist günstig, wenn beispielsweise die Anfangsdrehzahl der Ausgangswelle 2000 n/min beträgt. In praktischer Durchführung des Verfahrens kann dies bedeuten, dass in etwa eine typische Zeitspanne von ungefähr 500ms vergeht, bis die Drehzahl auf 1500 n/min abgefallen ist. Ein Faktor Y = 2 ist günstig, da dies eine plötzliche Halbierung der Drehzahl der Ausgangswelle bedeutet, so dass zweifelsfrei auf eine abrupte Abbremsung geschlossen werden kann.

Bevorzugt umfassen die Betätigungseinheiten zum Befüllen und Entleeren jeweils ein elektrisch ansteuerbares Ventil, wobei das Ventil zum Befüllen der zumindest teilweise entleerten zweiten der ersten oder zweiten Betätigungseinheit während des Zeitintervall t₃ zumindest annähernd vollständig geöffnet wird. Hierdurch wird eine maximaler Durchfluss durch das Ventil gewährleist, so dass die Zeitspanne, währenddessen das Ventil geöffnet ist, um die Betätigungseinheit zu Befüllen, kurz gehalten werden kann.

Bevorzugt umfasst die Kupplungsanordnung eine Übersetzungsstufe, die mittels der Rückwärtskupplung gegenüber einem Gehäuse der Kupplungsanordnung arretierbar ist, zur antriebsmäßigen reversierenden Verbindung der Eingangswelle mit der Ausgangswelle. Insbesondere ist vorgesehen, dass die Übersetzungsstufe als Planetenradgetriebe gestaltet ist.

Bevorzugt umfasst das Verfahren die weiteren Schritte: Aufbringen eines hydraulischen Drucks p₂ auf die erste der ersten oder zweiten Betätigungseinheit über ein Zeitintervall t₄, Erhöhen des hydraulischen Drucks p₂ in der Betätigungseinheit über ein Zeitintervall t₅ und Messen des hydraulischen Drucks p₂ über den Verlauf des Zeitintervalls t₅, Abspeichern des mittleren hydraulischen Drucks p_{2,mittel} wenn ein Schwingen des hydraulischen Drucks p₂ eine Amplitudenhöhe übersteigt.

Im Folgenden wird das erfindungsgemäße Verfahren anhand der Figuren beschrieben. Hierin zeigen
- Figur 1: Längsschnitt durch eine Kupplungsanordnung,
- Figur 2a: Verlauf des Stroms zur Betätigung des Ventils der Betätigungseinheit für die Vorwärtskupplung
- Figur 2b: Verlauf der Ströme der Betätigungseinheiten und der Drehzahl der Ausgangswelle während Durchführung des erfindungsgemäßen Verfahrens und
- Figur 3: Verlauf des Kupplungsdrucks einer Kupplung bei Bestimmung des Kiss-Up-Drucks.

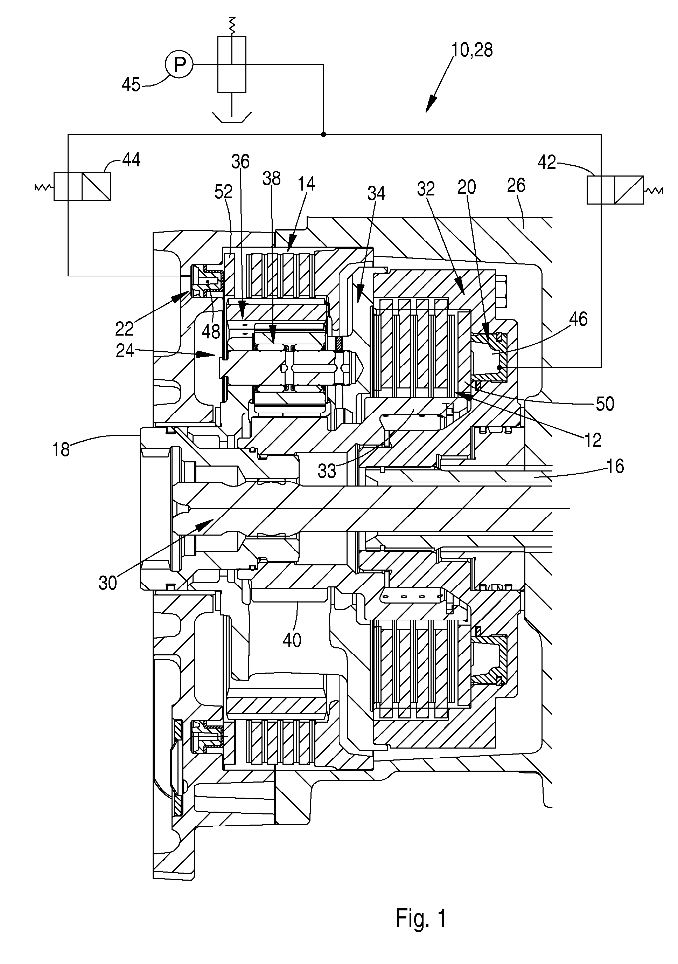

Figur 1 zeigt eine Kupplungsanordnung 10 für ein landwirtschaftliches Nutzfahrzeug, die als Reversiereinheit 28 ausgebildet ist und in einem Gehäuse 26 angeordnet ist. Es sind eine Eingangswelle 16 und eine Ausgangswelle 18 vorgesehen, die beide als Hohlwelle ausgebildet sind. Innerhalb der Eingangswelle 16 und Ausgangswelle 18 läuft eine im Weiteren nicht näher beschriebene Welle 30 zum Antrieb beispielsweise der Zapfwelle des Nutzfahrzeugs.

Die Eingangswelle 16 kann über eine Vorwärtskupplung 12 antriebsmäßig mit der Ausgangswelle 18 verbunden werden, so dass beide Wellen 16, 18 die gleiche Drehrichtung haben. Die Vorwärtskupplung 12 ist vorliegend als Lamellenkupplung gestaltet. Der Außenlamellentrager 32 ist mit einem Planetenradträger 34 einer als Doppelplanetenradgetriebe ausgebildeten Übersetzungsstufe 24 verbunden. Das Hohlrad 36 des Doppelplanetenradgetriebes ist über eine Rückwärtskupplung 14, auch Rückwärtsbremse genannt, gegenüber dem Gehäuse 26 arretierbar. Die Rückwärtskupplung ist ebenfalls als Lamellenkupplung gestaltet. Nach radial innen treiben die auf dem Planetenradträger 34 gelagerten Planetenräder 38 das Sonnenrad 40 an, das sowohl mit dem Innenlamellenträger 33 der Vorwärtskupplung 12 als auch mit der Ausgangswelle 18 in geeigneter Weise antriebsmäßig verbunden ist. Die Eingangswelle 16 kann über die Rückwärtskupplung 14 und die Übersetzungsstufe 24 antriebsmäßig reversierend mit der Ausgangswelle 18 verbunden werden, so dass beide Wellen 16, 18 entgegengesetzte Drehrichtungen haben. Die Vorwärtskupplung 12 und die Rückwärtskupplung 14 sind jeweils mit Betätigungseinheiten 20, 22 ansteuerbar. Die Betätigungseinheiten 20, 22 umfassen jeweils ein elektromagnetisch ansteuerbares Ventil 42, 44, über die Hydrauliköl, welches über eine Hydraulikpumpe 45 unter Druck gesetzt wird, den jeweiligen Druckkammern 46, 48 der Betätigungseinheiten 20, 22 zugeführt werden kann. Die Betätigungseinheiten 20, 22 wirken auf jeweilige Druckplatten 50, 52 der Kupplungen 12, 14. Über die Druckplatten 50, 52 werden die Reiblamellen der Kupplungen 12, 14 gegeneinander beaufschlagt. Nicht in der Figur 1 zu erkennen, da versetzt zu der Schnittebene angeordnet, sind Druckfedern, die umfänglich angeordnet sind und die Druckplatten 50, 52 von den Reiblamellen wegbeaufschlagen, wenn keine hydraulischer Druck in den Betätigungseinheiten 20, 22 herrscht.

Während des Betriebs des landwirtschaftlichen Nutzfahrzeugs wird die Betätigungseinheit 20, 22 der Kupplung 12, 14, die gerade für die Bewegung des Fahrzeug nicht geschalten sein muss, zumindest teilweise von Hydrauliköl entleert, um eine vollständige Entlastung der jeweiligen Kupplung 12, 14 sicherzustellen. Die bedeutet, dass die Druckkammer 46, 48 der jeweiligen Betätigungseinheit 20, 22 zumindest teilweise mit Luft gefüllt ist.

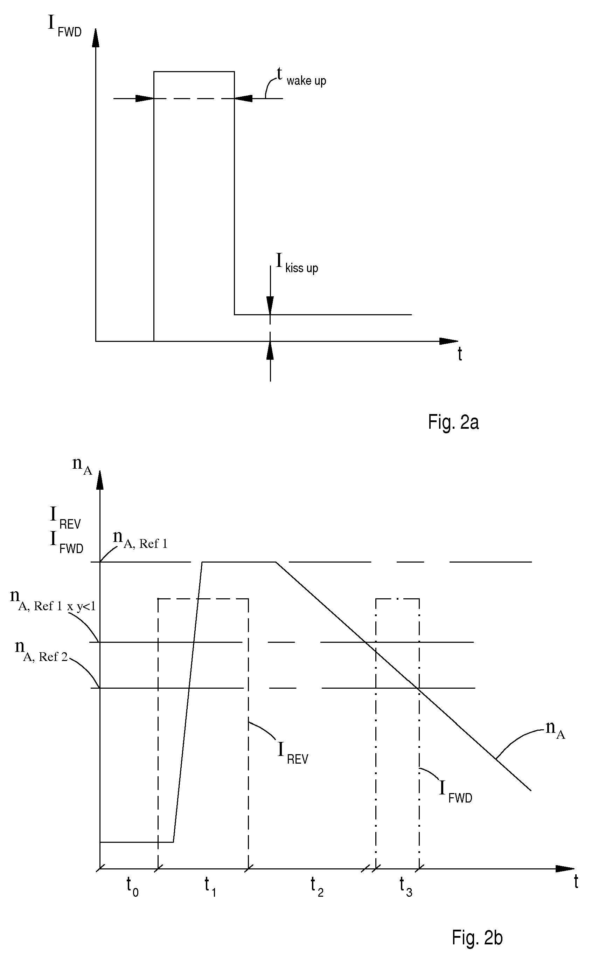

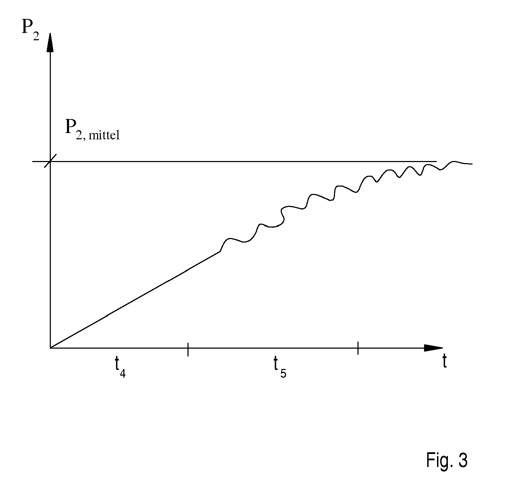

Das erfindungsgemäße Verfahren dient dazu, genau diese Ölmenge zu bestimmen, wobei diese Ölmenge keine pauschal für einen Getriebetyp zu bestimmende Ölmenge ist, sondern vielmehr für jedes Getriebe infolge von Fertigungstoleranzen einzeln zu bestimmen ist. Es können bei dem erfindungsgemäßen Verfahren weitere Verfahrensschritte vorgesehen werden, über die genau der Kupplungsdruck bestimmt wird, der nach dem Entlüften der gerade angesteuerten Betätigungseinheit 20, 22 eingestellt werden muss, damit sich kein träges Schaltgefühl einstellt. Dieser Kupplungsdruck ist dann richtig eingestellt, wenn er im Gleichgewicht mit den Rückstellkräften der Druckfedern ist. In Figur 2a ist schematisch und exemplarisch für die Vorwärtskupplung 12 der Verlauf des Stroms I_{FWD}, mit dem das Ventil 42 beaufschlagt wird, über der Zeit aufgetragen. Zu erkennen ist, dass der Strom I_{FWD} zunächst für ein definiertes Zeitintervall, welches auch als Wake-Up-Impulsdauer bezeichnet werden kann, auf einen hohen Wert ansteigt. Währenddessen ist das Ventil 42 vollständig geöffnet und die Betätigungseinheit 20 wird entlüftet. Im Anschluss an dieses Zeitintervall wird der Strom I_{FWD} reduziert auf ein Niveau, bei dem die Vorwärtskupplung 12 bereits einen minimalen Kraftschluss aufbaut. Der in diesem Zustand herrschende Kupplungsdruck kann auch als Kiss-Up-Druck bezeichnet werden und geht einher mit charakteristischen und messbaren Schwingungen im Öldruck, wie in der Figur 3 zu erkennen ist.

Im Folgenden wird das erfindungsgemäße Verfahren anhand der Figur 2b beschrieben. Das Verfahren muss für eine Kupplungsanordnung 10, die eine Vorwärtskupplung 12 und eine Rückwärtskupplung 14 umfasst, für jede Kupplung 12, 14 einzeln durch geführt werden, wobei nachfolgend lediglich das Verfahren zur Anwendung bei der Vorwärtskupplung 12 beschrieben wird.

Figur 2b zeigt über der Zeitachse aufgetragen zunächst die Drehzahl n_{A} der Ausgangswelle 18. Weiterhin sind über der Zeitachse aufgetragen der Strom I_{FWD} und der Strom I_{REV}. Hierbei handelt es sich um die Ströme, mit denen jeweils die Ventile 42, 44 der Betätigungseinheiten 20, 22 zur Öffnung beaufschlagt werden. Zu Beginn des Verfahrens wird die Eingangswelle 16 mit einer Drehzahl n_{E} von beispielsweise 2000 n/min angetrieben. Die konstante Drehzahl der Eingangswelle 16 ist nicht in Figur 2b eingezeichnet. Infolge parasitärer Kraftschlusseffekte wird sich die Ausgangswelle 18 mit einer niedrigen Drehzahl mitdrehen. Die Drehzahl der Ausgangswelle 18 wird in der Figur 2b durch die durchgezogene Linie repräsentiert. Innerhalb eines Zeitintervalls t₀ wird die Betätigungseinheit 20 der Vorwärtskupplung 12 entleert, so dass sich Luft in der Druckkammer 46 befindet.

Während eines nachfolgendes Zeitintervalls t₁ wird ein Strom I_{REV} auf das Ventil 44 der Betätigungseinheit 22 der Rückwärtskupplung 14 gegeben, so dass sich das Ventil 44 zumindest annähernd vollständig öffnet und die Rückwärtskupplung 14 mit einem Öldruck p₁ beaufschlagt wird. Der Strom I_{REV} wird durch die gestrichelte Linie in der Figur 2b repräsentiert. Da es sich vorliegend bei der Übersetzungsstufe 24 um eine Reversiereinheit handelt, dreht sich die Ausgangswelle 18 in ihrer Drehrichtung entgegengesetzt zu der Eingangswelle 16. Die Drehzahl n_{A} der Ausgangswelle 18 wird in der Figur 2b durch die durchgezogene Linie repräsentiert. Das Zeitintervall t₁ endet, wenn anhand eines Vergleichs der Drehzahl n_{E} der Eingangswelle 16 und der Drehzahl n_{A} der Ausgangswelle 18 ein zumindest annähernd schlupffreier Zustand der angesteuerten Rückwärtskupplung 14 detektiert wird. Am Ende des Zeitintervalls t₁ wird die Drehzahl n_{A} der Ausgangswelle 18 gemessen und als erste Referenzdrehzahl n_{A,Ref1} gespeichert.

Ebenfalls am Ende des Zeitintervalls t₁ wird der Öldruck p₁ in der Betätigungseinheit 22 der Rückwärtskupplung 14 entlastet und zumindest teilweise entleert, so dass die Ausgangswelle 18 im folgenden im weitesten Sinne frei dreht beziehungsweise nicht mehr angetrieben wird und lediglich von parasitären Lasten abgebremst wird.

Über ein nachfolgendes Zeitintervall t₂ wird die Drehzahl n_{A} der Ausgangswelle 18 kontinuierlich gemessen, wobei die Drehzahl n_{A} der Ausgangswelle 18 infolge der auf sie wirkenden parasitären Lasten abgebremst wird. Das Ende des Zeitintervalls t₂ ist erreicht, wenn die Drehzahl n_{A} der Ausgangswelle 18 auf 75% der erste Referenzdrehzahl n_{A,Ref1} abgefallen ist. Je nach Einsatzbereich des Verfahrens kann auch eine von 75% abweichende Drehzahlabfallsgrenze sinnvoll sein. Nach Ende des Zeitintervalls t₂ wird die mittlere Beschleunigung aₘᵢₜₜₑₗ der Ausgangswelle 18 über das Zeitintervall t₂ berechnet und gespeichert, wobei dies unter Berücksichtigung des Betrages eine Verzögerung ist. Als Erfahrungswert für die Länge des Zeitintervalls t₂ kann von ungefähr 500ms ausgegangen werden.

Während eines nachfolgenden Zeitintervalls t₃ wird das Ventil 42 der zumindest teilweise entleerten Betätigungseinheit 20 der Vorwärtskupplung 12 mit einem Strom I_{FWD} beaufschlagt, so dass sich das Ventil 42 zumindest annähernd vollständig öffnet und die Betätigungseinheit 20 entlüftet und mit Hydrauliköl gefüllt wird. Der Strom I_{FWD} wird durch die strichpunktierte Linie in der Figur 2b repräsentiert. Bei dem Zeitintervall t₃ handelt es sich um die zu kalibrierenden Wake-Up-Impulsdauer, so dass der Länge des Zeitintervalls t₃ erfindungsgemäß insofern die entscheidende Bedeutung zu kommt, als dass es für den einwandfreien Betrieb der Kupplungsanordnung 10 darauf ankommt, dass das Zeitintervall t₃ weder zu lang noch zu kurz bemessen ist. Bei dem Zeitintervall t₃ handelt es sich um den mit dem erfindungsgemäßen Verfahren zu kalibrierenden beziehungsweise einzustellenden Wert.

Beim erstmaligen Durchlaufen des erfindungsgemäßen Verfahrens wird das Zeitintervall t₃ so kurz gewählt, dass die Betätigungseinheit 20 am Ende noch nicht vollständig entlüftet ist, dass heißt sich weiterhin Luft in ihr befindet. In diesem Zustand wird sich trotz Rotation der Kupplungsvorrichtung 10 kein hydraulischer Druck in der Betätigungseinheit 20 aufbauen und die Vorwärtskupplung 12 wird weiterhin nicht wirksam sein. Am Ende des Zeitintervall t₃ wird die Drehzahl n_{A} der Ausgangswelle 18 als zweite Referenzdrehzahl n_{A,Ref2} gemessen und gespeichert. Anschließend wird die zweite Referenzdrehzahl n_{A,Ref2} mit einer zum Ende des Zeitintervall t₃ aus der ersten Referenzdrehzahl n_{A,Ref1} und der mittleren Beschleunigung aₘᵢₜₜₑₗ berechneten Drehzahl n_{A,calc} der Ausgangswelle 18 verglichen. Der soeben beschriebene Zustand, nämlich der der noch nicht vollständig entlüfteten Betätigungseinheit 20, ist dadurch zu detektieren, dass die zweite Referenzdrehzahl n_{A,Ref2} annähernd gleich der berechneten Drehzahl n_{A,calc} der Ausgangswelle 18 ist. Eine zusätzliche Abbremsung der Ausgangswelle 18 durch die Vorwärtskupplung 12 hat noch nicht stattgefunden, da diese durch die nicht vollständige Entlüftung der Betätigungseinheit 20 nicht wirksam einen Kraftfluss zu der sich weiterhin mit der Drehzahl n_{E} angetriebenen Eingangswelle 16 herstellen konnte. Als Erfahrungswert für das Zeitintervall t₃, der dem erstmaligen Durchführen des Verfahrens zugrundegelegt werden kann, kann 50ms angenommen werden.

Anschließend werden die vorangegangenen Verfahrensschritte erneut durchgeführt, wobei nun die Betätigungseinheit 20 über ein längeres Zeitintervall t_{3,verl} befüllt wird. Hierbei kann der zeitliche Unterschied zwischen dem Zeitintervall t₃ und dem Zeitintervall t_{3,verl} beispielsweise 5ms oder 10ms betragen.

Sollte hierbei die Länge des Zeitintervall t_{3,verl} gerade ausreichend sein, dass die Betätigungseinheit 20 vollständig entlüftet ist, stellt sich infolge der durch die Rotation der Kupplungsanordnung 10 entstehenden Fliehkräfte ein geringer Öldruck in der Betätigungseinheit 20, so dass die Vorwärtskupplung 12 einen minimalen Kraftschluss zwischen Eingangswelle 16 und Ausgangswelle 18 erzeugt, der eine stärkere Abbremsung der Ausgangswelle 18 als die parasitären Lasten bewirkt. Dieser Zustand lässt sich bei einem Vergleich der zweite Referenzdrehzahl n_{A,Ref2} mit der berechneten Drehzahl n_{A,calc} der Ausgangswelle 18 dadurch detektieren, dass die zweite Referenzdrehzahl n_{A,Ref2} zwar kleiner als die berechnete Drehzahl n_{A,calc} ist, allerdings nicht deutlich kleiner, sondern nur geringfügig kleiner.

Sollte die Länge des Zeitintervall t_{3,verl} allerdings so lang sein, dass die Betätigungseinheit 20 vollständig entlüftet ist und bereits zusätzlich ein geringer Öldruck in der Betätigungseinheit 20 durch Zufluss von Hydrauliköl aufgebaut wurde, entsteht in der Vorwärtskupplung 12 ein stärkerer Kraftschluss, der eine deutliche Abbremsung der Ausgangswelle 18 bewirkt. Dieser Zustand lässt sich bei einem Vergleich der zweiten Referenzdrehzahl n_{A,Ref2} mit der berechneten Drehzahl n_{A,calc} der Ausgangswelle 18 dadurch detektieren, dass die zweite Referenzdrehzahl n_{A,Ref2} deutlich kleiner als die berechnete Drehzahl n_{A,calc} ist. In diesem Fall sollte die Länge des Zeitintervall t_{4,verl} reduziert werden.

Als letzter Verfahrensschritt wird diese Länge des Zeitintervalls t₃ oder t_{3,verl}, bei dem die zweite Referenzdrehzahl n_{A,Ref2} geringfügig kleiner als die berechnete Drehzahl n_{A,calc} ist, abgespeichert. Bei diesem Wert des Zeitintervalls t₃ handelt es sich um die erfindungsgemäß zu bestimmende Wake-Up-Impulsdauer.

Zur Bestimmung des erforderlichen Kupplungsdrucks beziehungsweise des entsprechenden Strom I_{FWD}, mit dem das Ventil 42 nach dem Entlüften der Betätigungseinheit 20 beaufschlagt werden muss, wird ein hydraulischer Druck p₂ auf die Betätigungseinheit 20 der Vorwärtskupplung 12 über ein Zeitintervall t₄ aufgebracht, wie in der Figur 3 zu erkennen. Bei dem Druck p₂ soll es sich um einen geringen Druck handeln, so dass die Vorwärtskupplung 12 noch keinen Kraftfluss überträgt. Das Zeitintervall t₄ beträgt bevorzugt wenige Sekunden.

Während einen nachfolgenden Zeitintervalls t₅ wird der hydraulische Druck p₂ in der Betätigungseinheit 20 durch Steigerung des Stroms I_{FWD} erhöht und der hydraulische Druck p₂ über den Verlauf des Zeitintervalls t₅ gemessen. Wenn ein Schwingen des hydraulischen Drucks p₂ eine Amplitudenhöhe übersteigt, wird dieser mittlere hydraulische Druck p_{2,mittel} abgespeichert. Bei diesem mittleren hydraulischen Druck p_{2,mittel} handelt es sich um den Kiss-Up-Druck. Der hierzu korrespondierende Strom I_{FWD} kann ebenfalls abgespeichert werden. Dieser Betriebszustand kann durch den Stromfluss oder durch den mittleren hydraulischen Druck beziehungsweise das Druckkommando charakteristisch erfasst werden und als erfindungsgemäßer Kalibrierwert abgespeichert werden.

### Bezugszeichenliste

- 10: Kupplungsanordnung
- 12: Vorwärtskupplung
- 14: Rückwärtskupplung
- 16: Eingangswelle
- 18: Ausgangswelle
- 20: Betätigungseinheit
- 22: Betätigungseinheit
- 24: Übersetzungsstufe
- 26: Gehäuse
- 28: Reversiereinheit
- 30: Welle
- 32: Außenlamellentrager
- 33: Innenlamellenträger
- 34: Planetenradträger
- 36: Hohlrad
- 38: Planetenräder
- 40: Sonnenrad
- 42: Ventil
- 44: Ventil
- 45: Hydraulikpumpe
- 46: Druckkammer
- 48: Druckkammer
- 50: Druckplatte
- 52: Druckplatte

## Patentansprüche

1. Verfahren zur Füllmengenbestimmung in der Aktuatorik einer Kupplungsanordnung (10), welche eine Vorwärtskupplung (12) und eine Rückwärtskupplung (14) jeweils zum antriebsmäßigen Verbinden einer Eingangswelle (16) mit einer Ausgangswelle (18) aufweist,
wobei zur Betätigung der Vorwärtskupplung (12) eine erste steuerbare Betätigungseinheit (20) und zur Betätigung der Rückwärtskupplung (14) eine zweite steuerbare Betätigungseinheit (22) vorgesehen ist, **gekennzeichnet durch** folgende Verfahrensschritte:
kontinuierliches Antreiben der Eingangswelle (16) mit einer Drehzahl (n_{E}),
Aufbringen eines hydraulischen Drucks (p₁) auf die erste der ersten oder zweiten Betätigungseinheit (20, 22) über ein Zeitintervall (t₁),
Messen und Speichern der Drehzahl (n_{A}) der Ausgangswelle (18) als erste Referenzdrehzahl (n_{A,Ref1}) und Entlasten des hydraulischen Drucks (p₁) in der ersten der ersten oder zweiten Betätigungseinheit (20, 22) am Ende des Zeitintervalls (t₁),
kontinuierliches Messen der Drehzahl (n_{A}) der Ausgangswelle (18) und Erfassen der Länge eines Zeitintervalls (t₂), an dessen Ende die Drehzahl (n_{A}) auf einen Faktor X < 1 der ersten Referenzdrehzahl (n_{A,Ref1}) abgefallen ist,
Berechnen und Speichern der mittleren Beschleunigung (aₘᵢₜₜₑₗ) der Ausgangswelle (18) über das Zeitintervall (t₂),
Befüllen der zumindest teilweise entleerten zweiten der ersten oder zweiten Betätigungseinheit (22, 20) über ein Zeitintervall (t₃),
Messen und Abspeichern der Drehzahl (n_{A}) der Ausgangswelle (18) als zweite Referenzdrehzahl (n_{A,Ref2}) am Ende des Zeitintervalls (t₃),
Vergleichen der zweiten Referenzdrehzahl (n_{A,Ref2}) mit einer zum Ende des Zeitintervalls (t₃) aus der ersten Referenzdrehzahl (n_{A,Ref1}) und der mittleren Beschleunigung (aₘᵢₜₜₑₗ) berechneten Drehzahl (n_{A,Calc}) der Ausgangswelle (18),
erneutes Durchführen der vorherigen Verfahrensschritte, mit einem verlängerten Zeitintervall (t_{3,verl}), wenn
die zweite Referenzdrehzahl (n_{A,Ref2}) annähernd gleich der berechneten Drehzahl (n_{A,Calc}) ist oder mit einem verkürzten Zeitintervall (t₃, ᵥₑᵣₖ), wenn die zweite Referenzdrehzahl (n_{A,Ref2}) um Faktor Y > 1 kleiner als die berechnete Drehzahl (n_{A},_{Calc}) ist,
Abspeichern der Länge des Zeitintervalls (t₃, t₃, ᵥₑᵣₗ, t₃, ᵥₑᵣₖ), wenn die zweite Referenzdrehzahl (n_{A,Ref2}) annähernd kleiner der berechneten Drehzahl (n_{A,Calc}) ist.

2. Verfahren zur Füllmengenbestimmung nach Anspruch 1, **gekennzeichnet durch** den Verfahrensschritt:
zumindest teilweises Entleeren der zweiten der ersten oder zweiten Betätigungseinheit über ein Zeitintervall (t₀),

3. Verfahren zur Füllmengenbestimmung nach Anspruch 2, **dadurch gekennzeichnet,**
**dass** das Zeitintervall (t₀) in Abhängigkeit der Drehzahl (n_{E}) der Eingangswelle (16) zwischen 5 und 10 Sekunden beträgt.

4. Verfahren zur Füllmengenbestimmung nach einem der Ansprüche 1 bis 3, **dadurch gekennzeichnet,**
**dass** das Zeitintervall (t₁) endet, wenn anhand eines Vergleichs der Drehzahlen (n_{E}, n_{A}) der Eingangswelle (16) und der Ausgangswelle (18) ein zumindest annähernd schlupffreier Zustand der durch die erste der ersten oder zweiten Betätigungseinheit (20, 22) angesteuerten Vorwärtskupplung (12) oder Rückwärtskupplung (14) detektiert wird.

5. Verfahren zur Füllmengenbestimmung nach einem der Ansprüche 1 bis 4, **dadurch gekennzeichnet,**
**dass** der Faktor X = 0,75 und der Faktor Y = 2 beträgt.

6. Verfahren zur Füllmengenbestimmung nach einem der Anspruch 1 bis 5, **gekennzeichnet durch** die weiteren Verfahrensschritte:
Aufbringen eines hydraulischen Drucks (p₂) auf die erste der ersten oder zweiten Betätigungseinheit (20, 22) über ein Zeitintervall (t₄)
Erhöhen des hydraulischen Drucks (p₂) in der Betätigungseinheit (20, 22) über ein Zeitintervall (t₅) und Messen des hydraulischen Drucks (p₂) über den Verlauf des Zeitintervalls (t₅)
Abspeichern des mittleren hydraulischen Drucks (P_{2,mittel}), wenn ein Schwingen des hydraulischen Drucks (p₂) eine Amplitudenhöhe übersteigt.

7. Verfahren zur Füllmengenbestimmung nach einem der Ansprüche 1 bis 6, **dadurch gekennzeichnet,**
**dass** die Betätigungseinheiten (20, 22) zum Befüllen und Entleeren jeweils ein elektrisch ansteuerbares Ventil umfassen, wobei das Ventil zum Befüllen der zumindest teilweise entleerten zweiten der ersten oder zweiten Betätigungseinheit (22, 20) während des Zeitintervall (t₄) zumindest annähernd vollständig geöffnet wird.

8. Verfahren zur Füllmengenbestimmung nach einem der Anspruch 1 bis 7, **dadurch gekennzeichnet,**
**dass** die Kupplungsanordnung (10) eine Übersetzungsstufe (24) umfasst, die mittels der Rückwärtskupplung (14) gegenüber einem Gehäuse (26) der Kupplungsanordnung (10) arretierbar ist, zur antriebsmäßigen reversierenden Verbindung der Eingangswelle (16) mit der Ausgangswelle (18).

## Claims

1. Method for determining the filling quantity in the actuating system of a clutch arrangement (10) which has a forward clutch (12) and a reverse clutch (14) for the respective connection of an input shaft (16) to an output shaft (18) for drive purposes, wherein for actuating the forward clutch (12) there is a first controllable actuating unit (20) and for actuating the reverse clutch (14) there is a second controllable actuating unit (22), **characterized by** the following method steps:
continuously driving the input shaft (16) at a speed (n_{E}),
applying a hydraulic pressure (p₁) to the first of the first or second actuating unit (20, 22) over a time interval (t₁),
measuring and storing the speed (n_{A}) of the output shaft (18) as a first reference speed (n_{A,Ref1}) and releasing the hydraulic pressure (p₁) in the first of the first or second actuating unit (20, 22) at the end of the time interval (t₁),
continuously measuring the speed (n_{A}) of the output shaft (18) and detecting the length of a time interval (t₂) at the end of which the speed (n_{A}) has dropped to a factor X < 1 of the first reference speed (n_{A,Ref1}),
calculating and storing the mean acceleration (aₘᵢₜₜₑₗ) of the output shaft (18) over the time interval (t₂),
filling the at least partially emptied second of the first or second actuating unit (22, 20) over a time interval (t₃),
measuring and storing the speed (n_{A}) of the output shaft (18) as a second reference speed (n_{A,Ref2}) at the end of the time interval (t₃),
comparing the second reference speed (n_{A,Ref2}) with a speed (n_{A,calc}) of the output shaft (18) calculated at the end of the time interval (t₃) from the first reference speed (n_{A,ref1}) and the mean acceleration (aₘᵢₜₜₑₗ),
renewed implementation of the previous method steps, with an extended time interval (t_{3,ver1} when the second reference speed (n_{A,Ref2}) is approximately equal to the calculated speed (n_{A,calc}) or with a short time interval (t₃,ᵥₑᵣₖ) when the second reference speed (n_{A,Ref2}) is less by a factor Y > 1 than the calculated speed (n_{A,Calc}),
storing the length of the time interval (t_{3,} t_{3, ver1,} t_{3, verk}) when the second reference speed (n_{A,Ref2}) is approximately less than the calculated speed (n_{A,Calc}).

2. Method for determining the filling quantity according to Claim 1, **characterized by** the method step:
at least partially emptying the second of the first or second actuating unit over a time interval (to).

3. Method for determining the filling quantity according to Claim 2 **characterized in that** the time interval (to) amounts to between 5 and 10 seconds in dependence on the speed (n_{E}) of the input shaft (16).

4. Method for determining the filling quantity according to one of Claims 1 to 3 **characterized in that** the time interval (t₁) ends when from a comparison of the speeds (n_{E,}n_{A}) of the input shaft (16) and the output shaft (18) an at least approximately slip-free state is detected of the forward clutch (12) or reverse clutch (14) controlled by the first of the first or second actuating unit (20, 22).

5. Method for determining the filling quantity according to one of Claims 1 to 4 **characterized in that** the factor X = 0.75 and the factor Y = 2 applies.

6. Method for determining the filling quantity according to one of Claims 1 to 5 **characterized by** the further method steps:
applying a hydraulic pressure (p₂) to the first of the first or second actuating unit (20, 22) over a time interval (t₄)
increasing the hydraulic pressure (p₂) in the actuating unit (20, 22) over a time interval (t₅) and measuring the hydraulic pressure (p₂) over the path of the time interval (t₅)
storing the mean hydraulic pressure (p_{2,mittel}) when a vibration of the hydraulic pressure (p₂) exceeds an amplitude level.

7. Method for determining the filling quantity according to one of Claims 1 to 6 **characterized in that** the actuating units (20, 22) for filling and emptying each comprise an electrically controllable valve, wherein the valve for filling the at least partially emptied second of the first or second actuating unit (22, 20) is at least approximately fully opened during the time interval (t₄).

8. Method for determining the filling quantity according to one of Claims 1 to 7 **characterized in that** the clutch arrangement (10) comprises a transmission stage (24) which can be locked by means of the reverse clutch (14) relative to a housing (26) of the clutch arrangement (10), for the reversing drive connection of the input shaft (16) to the output shaft (18).

## Revendications

1. Procédé de détermination de la quantité de remplissage dans les actionneurs d'un ensemble d'embrayage (10), qui présente un embrayage de marche avant (12) et un embrayage de marche arrière (14) permettant chacun une liaison d'entraînement d'un arbre d'entrée (16) avec un arbre de sortie (18),
dans lequel il est prévu pour l'actionnement de l'embrayage de marche avant (12) une première unité d'actionnement réglable (20) et pour l'actionnement de l'embrayage de marche arrière (14) une deuxième unité d'actionnement réglable (22),
**caractérisé par** les opérations suivantes:
entraînement continu de l'arbre d'entrée (16) avec une vitesse de rotation (n_{E}),
application d'une pression hydraulique (p₁) à la première de la première ou de la deuxième unité d'actionnement (20, 22) pendant un intervalle de temps (t₁),
mesure et mémorisation de la vitesse de rotation (n_{A}) de l'arbre de sortie (18) comme première vitesse de rotation de référence (n_{A},_{Ref1}) et détente de la pression hydraulique (p₁) dans la première de la première ou de la deuxième unité d'actionnement (20, 22) à la fin de l'intervalle de temps (t₁),
mesure continue de la vitesse de rotation (n_{A}) de l'arbre de sortie (18) et détection de la longueur d'un intervalle de temps (t₂), à la fin duquel la vitesse de rotation (n_{A}) est tombée à un facteur X < 1 de la première vitesse de rotation de référence (n_{A,Ref1}),
calcul et mémorisation de l'accélération moyenne (a_{moy}) de l' arbre de sortie (18) pendant l'intervalle de temps (t₂),
remplissage de la deuxième de la première ou de la deuxième unité d'actionnement (22, 20), au moins en partie vidée, pendant un intervalle de temps (t₃),
mesure et mémorisation de la vitesse de rotation (n_{A}) de l'arbre de sortie (18) comme deuxième vitesse de rotation de référence (n_{A,Ref2}), à la fin de l'intervalle de temps (t₃),
comparaison de la deuxième vitesse de rotation de référence (n_{A,Ref2}) avec une vitesse de rotation (n_{A,Calc}) de l'arbre de sortie (18) calculée à la fin de l'intervalle de temps (t₃) à partir de la première vitesse de rotation de référence (n_{A,Ref1}) et de l' accélération moyenne (a_{moy}),
nouvelle exécution des opérations précédentes, avec un intervalle de temps prolongé (t_{3,prol}, lorsque
la deuxième vitesse de rotation de référence (n_{A,Ref2}) est approximativement égale à la vitesse de rotation calculée (n_{A,Calc}),
ou avec un intervalle de temps raccourci (t_{3,racc}), lorsque la deuxième vitesse de rotation de référence (n_{A},_{Ref2}) est inférieure d'un facteur Y > 1 à la vitesse de rotation calculée (n_{A,Calc}),
mémorisation de la longueur de l'intervalle de temps (t₃, t_{3,prol,} t_{3,racc}), lorsque la deuxième vitesse de rotation de référence (n_{A,Ref2}) est approximativement inférieure à la vitesse de rotation calculée (n_{A, Calc}).

2. Procédé de détermination de la quantité de remplissage selon la revendication 1, **caractérisé par** l'opération suivante:
vidange au moins partielle de la deuxième de la première ou de la deuxième unité d'actionnement pendant un intervalle de temps (t₀).

3. Procédé de détermination de la quantité de remplissage selon la revendication 2, **caractérisé en ce que** l'intervalle de temps (t₀) vaut entre 5 et 10 secondes, en fonction de la vitesse de rotation (n_{E}) de l' arbre d'entrée (16).

4. Procédé de détermination de la quantité de remplissage selon l'une quelconque des revendications 1 à 3, **caractérisé en ce que** l'intervalle de temps (t₁) se termine lorsque, à l'aide d'une comparaison des vitesses de rotation (n_{E}, n_{A}) de l'arbre d'entrée (16) et de l'arbre de sortie (18), on détecte un état au moins approximativement libre de glissement de l'embrayage de marche avant (12) ou de l'embrayage de marche arrière (14) commandé par la première de la première ou de la deuxième unité d'actionnement (20, 22).

5. Procédé de détermination de la quantité de remplissage selon l'une quelconque des revendications 1 à 4, **caractérisé en ce que** le facteur X vaut 0,75 et le facteur Y vaut 2.

6. Procédé de détermination de la quantité de remplissage selon l'une quelconque des revendications 1 à 5, **caractérisé par** les opérations supplémentaires:
application d'une pression hydraulique (p₂) à la première de la première ou de la deuxième unité d'actionnement (20, 22) pendant un intervalle de temps (t₄),
augmentation de la pression hydraulique (p₂) dans l'unité d'actionnement (20, 22) pendant un intervalle de temps (t₅) et mesure de la pression hydraulique (p₂) au cours de l'intervalle de temps (t₅),
mémorisation de la pression hydraulique moyenne (p_{2,moy}), lorsqu'une oscillation de la pression hydraulique (p₂) dépasse une hauteur d'amplitude.

7. Procédé de détermination de la quantité de remplissage selon l'une quelconque des revendications 1 à 6, **caractérisé en ce que** les unités d'actionnement (20, 22) comprennent respectivement une soupape à commande électrique pour le remplissage et la vidange, dans lequel la soupape pour le remplissage de ladite deuxième de la première ou de la deuxième unité d'actionnement (22, 20), au moins en partie vidée, est au moins approximativement entièrement ouverte pendant l'intervalle de temps (t₄).

8. Procédé de détermination de la quantité de remplissage selon l'une quelconque des revendications 1 à 7, **caractérisé en ce que** l'ensemble d'embrayage (10) comprend un étage de transmission (24), qui peut être bloqué au moyen de l'embrayage de marche arrière (14) par rapport à un boîtier (26) de l'ensemble d'embrayage (10), pour la liaison d'entraînement inversée de l'arbre d'entrée (16) avec l'arbre de sortie (18).
